## Europäisches Patentamt

## European Patent Office

## Office européen des brevets

(11) Publication number: **0 129 525**
**B1**

(12) **EUROPEAN PATENT SPECIFICATION**

(45) Date of publication of patent specification: **24.02.88**

(21) Application number: **84850186.2**

(22) Date of filing: **15.06.84**

(51) Int. Cl.⁴: **B 65 G 17/12,** B 65 G 33/00

(54) **Hoisting installation in mining.**

(30) Priority: **20.06.83 SE 8303515**

(43) Date of publication of application:
**27.12.84 Bulletin 84/52**

(45) Publication of the grant of the patent:
**24.02.88 Bulletin 88/08**

(84) Designated Contracting States:
**BE DE FR GB IT SE**

(56) References cited:
**DD-A- 104 268**
**DE-A-1 556 639**
**DE-C- 715 179**
**FR-A-1 267 586**
**FR-A-1 335 036**
**FR-A-2 356 579**

(73) Proprietor: **Tingskog, Karl August Lennart**
**Kattegattsgatan 23**
**S-253 71 Helsingborg (SE)**

(72) Inventor: **Tingskog, Karl August Lennart**
**Kattegattsgatan 23**
**S-253 71 Helsingborg (SE)**

(74) Representative: **Rostovanyi, Peter et al**
**AWAPATENT AB Box 5117**
**S-200 71 Malmö (SE)**

Courier Press, Leamington Spa, England.

## Description

In mining, primarily in coal mines, the desired material is extracted from deposits which may often extend as layers of varying thickness. In coal mines, the thickness of the layers often ranges from 0.5 to 2 m, and the layers are situated below sedimentary material. When the deposits, for instance the layers of coal, are located near the ground surface, open pit mines are used where large excavators remove the overlying masses in order to make the deposits accessible. At greater depths, underground mining is used and the material is then conveyed up to the ground surface in different ways. Current hoisting methods include transportation on trucks or belt conveyors in inclined galleries, mine hoists, large vertical shafts with special elevators (e.g. according to Bulk Solids Handling, Vol. 2, No. 3, September 1982 or FR—A—1,335,036). All of these hoisting systems are very expensive because e.g. shafts and galleries of very substantial cross-sectional areas must be used. This means that they must be located at certain places and are difficult to move from one place to another. For this reason, one will gradually have very long distances of underground transportation if deep mining is used.

FR—A—1,267,586 discloses a bucket elevator for lowering material from one gallery to another, the buckets of the elevator running in large shafts and function as speed-determining elements for the downward conveyance to a container for intermediate storage.

DE—A—1 556 639 relates to a screw conveyor having its screw journaled in a tubular housing by means of a specific bearing construction acting on the edge of the flights of the screw.

FR—A—2 356 579 relates to a pick-up unit in the form of a rake conveyor in which the material is conveyed through a tube acting as a housing and enclosing a part of the rake chain forming a closed loop, both parts of which pass through the tubular housing.

DE—C—715 179 relates to a bucket conveyor having its buckets mounted on a belt forming a closed loop, both parts of which pass through a common shaft of conventional type.

One object of the present invention is to provide a more cost effective and readily displaceable hoisting installation which not only reduces cost in connection with underground mining but also makes it possible to obviate some of the current mining at small depths in open pit mines which are most harmful to the environment.

The invention is based on the understanding that it is possible to use, as hoisting shafts, lined boreholes of a relatively small diameter which when substantially filled by the elevator of the hoisting installation, will both guide the elevator and, to a considerable extent, prevent the elevator from dropping material during the hoisting operation, whereby the elevator can be driven at high hoisting speeds.

According to the invention, these objects are achieved by the provision of a hoisting installation which is characterised in that the shaft of the installation consists of a lined circular borehole having a shaft diameter in the range of 400—700 mm. When using bucket elevators, the greatest advantages of the invention are gained if the installation has two circular boreholes disposed side by side and serving as shafts, one for the ascending run of the elevator and the other for the descending run of the elevator, each borehole being lined and the cross-section of each borehole being substantially filled by the descending and ascending runs, respectively, of the elevator. Alternatively, use may be made of a single borehole, in which case, at least for small depths, use may be made of a screw conveyor as elevator and, in case a bucket elevator is used, the two runs of the elevator are designed so as substantially to fill each one half of the cross-section of the borehole. This embodiment with a bucket elevator in one borehole is not as advantageous since for the same hoisting capacity it is necessary to make larger and, hence, more expensive boreholes and it may also prove difficult to prevent one run of the elevator from interfering with the other run during transport.

The present invention will entail a dramatic reduction of installation costs as compared with current hoisting installations. Since the shaft diameter is in the range 400—700 mm, it is possible to use the technique, developed e.g. in connection with oil prospecting, which consists in drilling holes and lining them with steel pipes. Since this technique is well known and relatively inexpensive as compared with making large shafts of a cross-sectional dimension of for instance 6 m, i.e. the shaft dimensions which are at present considered necessary for ensuring rational hoisting with current technique, it is possible at relatively low costs to move the hoisting installation so as to avoid underground transportation over long distances.

By forming the shafts as boreholes of a relatively small diameter, the thickness of the lining may be relatively small since lining tubes of a small thickness have reduced tendency to buckling at small diameters.

Normal capacity requirements for a coal mine may be 300—600 tons per hour, which may be easily achieved in shafts having a diameter of 400—700 mm, if use is made of one shaft with a screw conveyor or of one shaft for the ascending run and another shaft for the descending run of a bucket elevator or an undulated side wall belt conveyor. The hoisting distances in coal mines often range from 50 to 200 m. If present-day hoisting installations were to be used, considerations would often have been made towards using open pit mining for hoisting depths of 50 m or slightly deeper, since the known hoisting installations are very expensive. Using the present invention makes it economic to conduct underground mining even at as small depths as 20—50 m since it is possible, at a relatively low cost, to make new shafts near the underground mining site, thus always keeping the underground transports short. Deserted shafts may be used for instance for ventilation purposes.

An additional advantage of a hoisting installation according to the present invention is that the shafts of an abandoned mine will be essentially easier to close and conceal, whereby the risks of open large shafts of deserted mines are eliminated.

A number of embodiments of the invention will be described in greater detail hereinbelow with reference to the accompanying drawings, in which

Fig. 1 is a schematic section of a preferred embodiment of the hoisting installation according to the invention;

Fig. 2 is a section take along the line II—II in Fig. 1;

Fig. 3, on a larger scale, shows a preferred embodiment of a filling pocket in the installation according to Fig. 1;

Fig. 4 is a schematic vertical section of a portion of a shaft in the installation according to Fig. 1;

Fig. 5 is a section taken along the line V—V in Fig. 4;

Fig. 6 is a schematic vertical section of a portion of another embodiment of the shaft and the elevator in the installation according to Fig. 1;

Fig. 7 is a section taken along the line VII—VII in Fig. 6;

Fig. 8 is a schematic vertical section of a further embodiment of the installation in Fig. 1;

Fig. 9 is a section taken along the line IX—IX in Fig. 8;

Fig. 10 is a schematic vertical section of another embodiment of the hoisting installation according to the invention;

Fig. 11 is a schematic vertical section of a portion of the shaft in the installation according to Fig. 10;

Fig. 12 is a section taken along the line XII—XII in Fig. 11;

Fig. 13 is a cross-section of a tubular casing which has a central partition and is usable in the embodiment according to Fig. 10;

Fig. 14 shows part of a cross-section of another tubular casing which is usable in the installation according to Fig. 10; and

Fig. 15 schematically shows yet another embodiment of the invention.

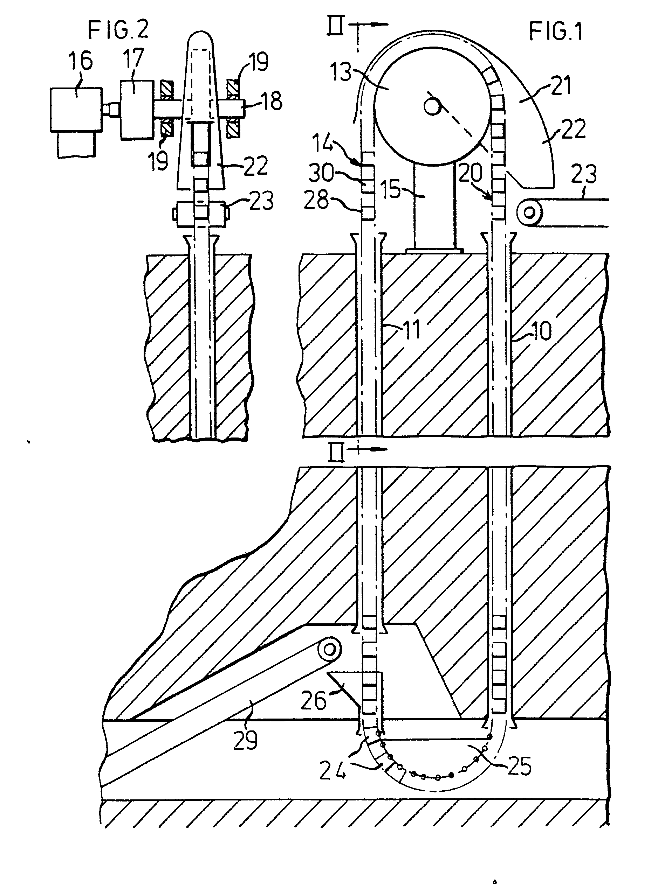

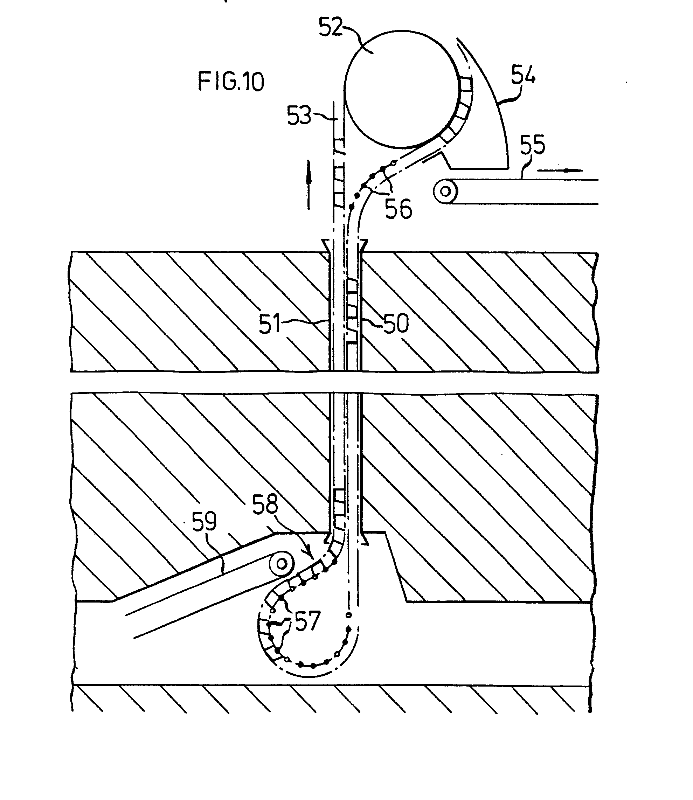

The embodiments of the installation according to the invention shown in Figs. 1—9 and 15 are preferred because one may here use lined boreholes having a diameter of 400—700 mm, as compared with considerably larger boreholes in the embodiments of Figs. 10—14, if it is desirable to maintain the same hoisting capacity.

The installation shown in Figs. 1 and 2 comprises two lined boreholes 10, 11 which are spaced by a distance which corresponds to the diameter of a drive and guide pulley 13 over which a bucket elevator 14 extends. The upper guide pulley 13 is rotatably carried by a frame 15 and driven by a motor 16 over a gear 17 and a shaft 18 mounted in bearings 19. The descending run 20 of the bucket elevator 14 passes through a discharge station 21 having a collecting funnel 22 from which the material is supplied to a conveyor belt 23. At the lower end of the lined borehole 10, the descending run 20 of the elevator passes as a hanging bow 24 which is preferably guided by a guide 25 so as to enter into a loading pocket 26 whose tubular inlet portion 27 encloses the ascending run 28 of the elevator. The loading station thus comprises this loading pocket 26 and a conveyor belt 29 which empties the material in the pocket 26. In order to optimise the loading operation while minimising the escape of material, the tubular inlet portion 27 of the loading pocket is preferably made of a resilient material, for instance a rubber sheet, so that this tube can resiliently engage and enclose the ascending run 28 and the buckets 30 of the elevator. The length of the tubular portion 27 is preferably greater than the distance between two successive buckets 30, whereby no material will escape through the tubular inlet portion 27.

In Figs. 4 and 5, there is shown a preferred embodiment of the elevator in the installation according to Fig. 1. This figure shows the shaft 11 and its tubular casing 32, but not the surrounding rock. The elevator thus has a traction belt 31 in the form of a reinforced rubber conveyor belt to which substantially cylindrical buckets 30 have been anchored by means of fixing elements 33. The buckets 30 are disposed at such a relative distance that the loading operation in the loading pocket becomes relatively simple. The advantage of this embodiment of the bucket elevator according to the invention is that the buckets 30, preferably consisting of steel, will substantially completely fill the cross-section of the lining tube 32, such that the buckets will be guided by this tube and practically no material will escape over the upper rim of the buckets.

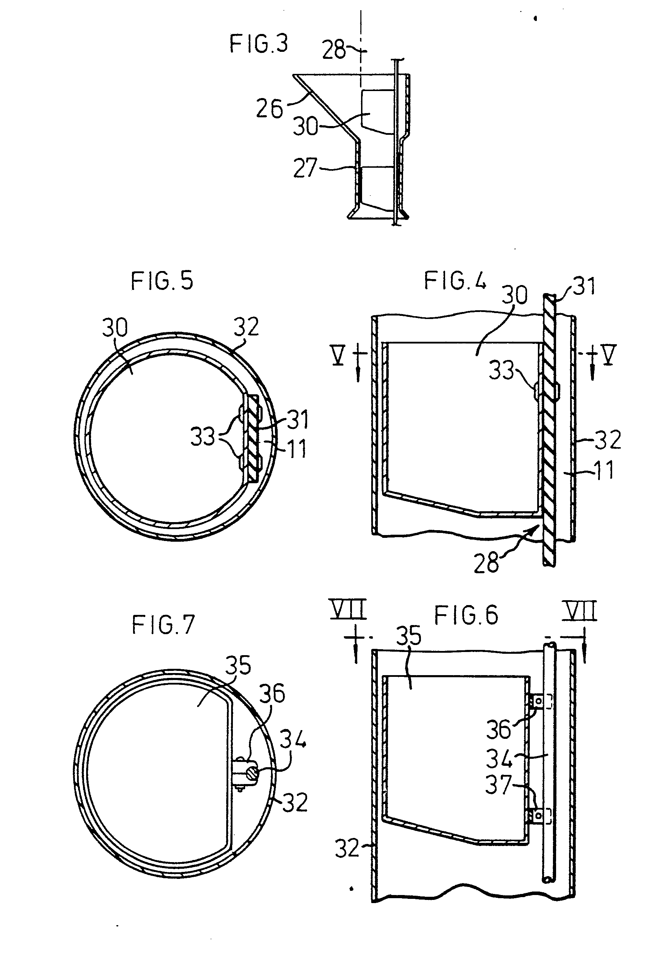

In Figs. 6 and 7, there is shown another embodiment of an elevator for the installation in Fig. 1. In this case, the traction belt 31 has been replaced by a traction wire 34 to which the buckets 35 have been clamped by means of an upper and a lower attachment 36 and 37, respectively. Here, only the upper attachment need be solidly anchored to the wire, preferably the steel wire 34.

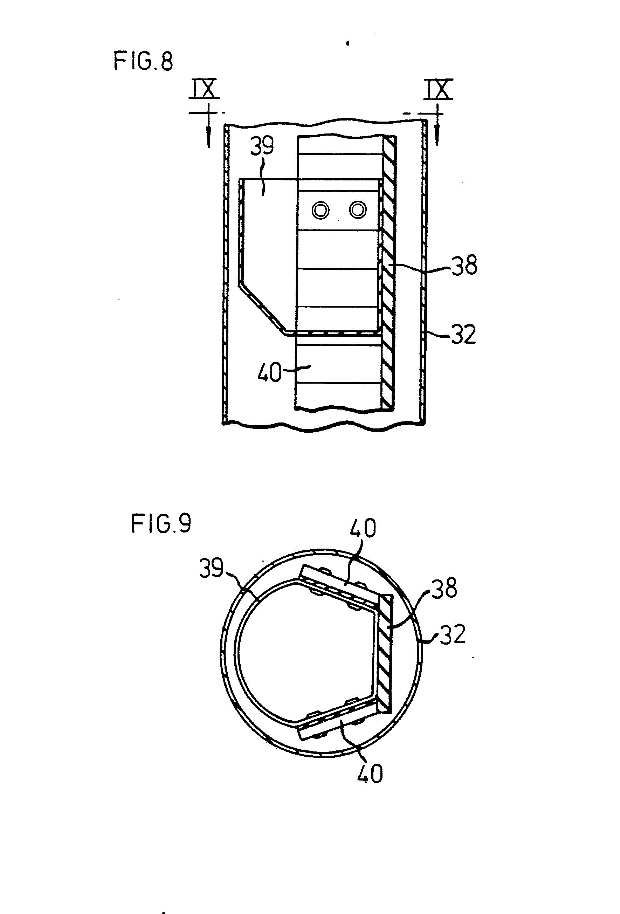

In Figs. 8 and 9, there is shown a further embodiment of an elevator for the installation in Fig. 1. In this instance, use is made of a so-called undulated side wall belt conveyor which comprises a rubber conveyor belt 38 to which a number of pockets 39 of a flexible rubber material are fixed. The pockets are mounted between undulated side walls 40 which are connected to the edges of the long sides of the belt 38. By the provision of these undulated side walls 40, the conveyor can pass over the upper guide pulley 13 and the lower guide 25.

As mentioned above, the embodiment of Figs. 1 and 2 is the preferred one since it is here possible to use fairly small boreholes while maintaining sufficient hoisting capacity. The embodiment in Fig. 10 requires boreholes of larger diameters, if the same hoisting capacity is to be maintained. Since larger boreholes are more expensive to make, some of the advantages of the installation will be lost by such an arrangement.

The embodiment of Fig. 10 thus comprises a lined borehole 50 with a lining tube 51. The installation further comprises an upper guide pulley 52 which is mounted in substantially the same manner as the guide pulley 13 in the embodiment according to Figs. 1 and 2. The installation also has a discharge station with a discharge hood 54 directing the goods towards a conveyor belt 55. In order to join the two runs of the conveyor or elevator 53, there is provided a guide 56 below the guide pulley 52. At the lower end of the elevator, there is either a guide pulley or guiding device 57 in the form of a number of small rollers which are arranged on a frame. This guide or guide pulley directs the elevator up towards a loading station 58 which is supplied with material by means of a conveyor 59.

As appears from Figs. 11 and 12, the elevator 53 is in the form of a bucket elevator with substantially semi-circular buckets 60 which are attached to a reinforced conveyor belt 61 by means of suitable fixing elements 62.

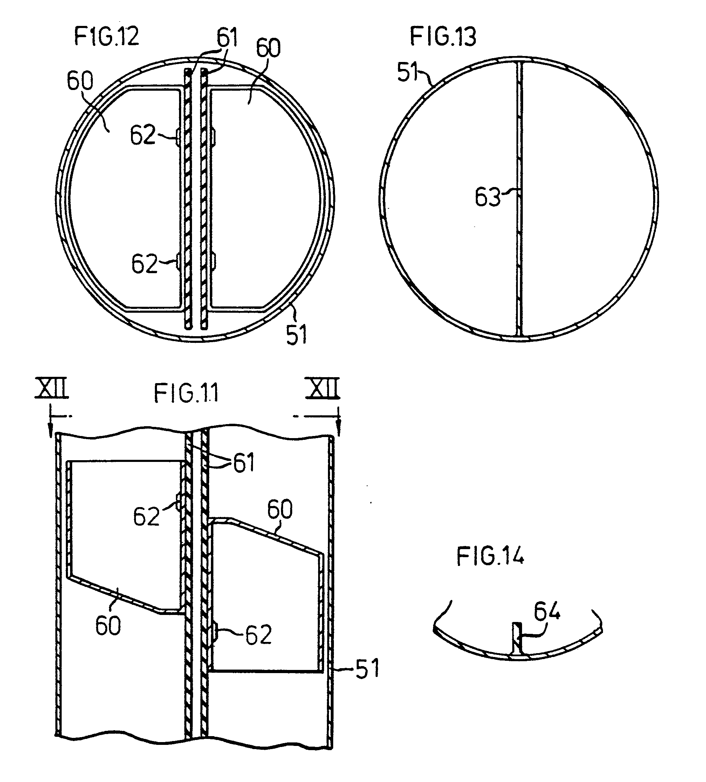

In order to improve the guiding of the ascending and descending runs of the elevator with respect to each other, the tubular casing or lining tube 51 may have a longitudinal partition 63 (Fig. 13) or a guide 64 in the form of a longitudinal rail (Fig. 14). In some cases, it is possible to use only one such longitudinal rail while in other cases it may be advantageous to use two diametrically opposed rails.

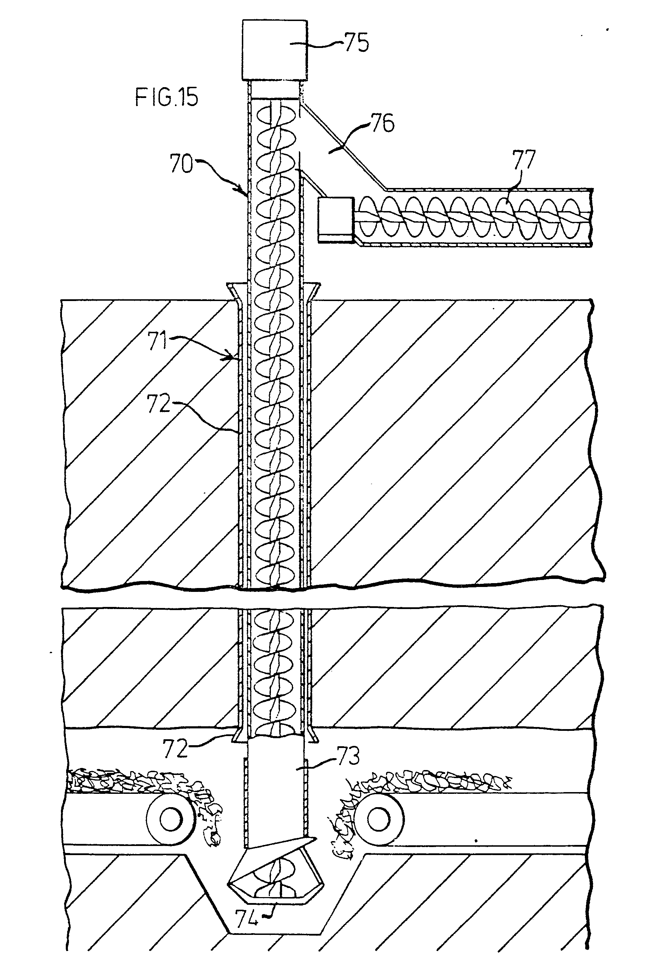

In Fig. 15 there is shown an embodiment which is preferred for small hoisting depths, e.g. 20—60 m. In the installation, use is made of a screw conveyor 70 as hoisting elevator in a lined borehole 71. The lining tube 72 of the borehole then serves as a support and guide for the tubular casing 73 of the screw conveyor. The tubular casing 73, in which intermediate bearings for the screw have been provided in a per se known way, extends down into the gallery and carries a feeder 74 which feeds the material, e.g. coal, into the screw conveyor. At the top of the screw conveyor, there is provided a drive motor 75 and a transition housing 76 which conducts the extracted material to another conveyor 77, for instance a screw or belt conveyor. With a screw conveyor of a diameter of e.g. 40—60 cm, it is possible to obtain hoisting capacities of 400—1,000 tons per hour, if high quality feeders are used. For depths exceeding 60 m, the power requirement for a screw conveyor is becoming so considerable that the bucket elevator alternative with two boreholes may prove more economic.

## Claims

1. A hoisting installation in mining having a shaft (10, 11, 50, 71) for an elevator (14, 53, 70) substantially filling the cross-section of the shaft, characterised in that the shaft (10, 11, 50, 71) of the installation consists of a lined circular borehole having a shaft diameter in the range of 400—700 mm.

2. Installation as claimed in claim 1, characterised in that the installation comprises two shafts (10, 11) disposed side by side, one for the ascending run (28) of the elevator and the other for the descending run (20) of the elevator, the cross-section of each shaft being essentially filled by the descending and ascending runs, respectively, of the elevator, and each of said shafts consisting of a lined circular borehole having a shaft diameter in the range of 400—700 mm.

3. Installation as claimed in claim 2, characterised in that the elevator (14, 53) has a traction wire (34) or a traction belt (31, 36, 61) and buckets (32, 35, 39) which are carried by said wire or belt and each of which substantially fills the cross-section of each borehole.

4. Installation as claimed in claim 2, characterised in that the elevator (14) consists of an undulated side wall belt conveyor (53) which is equipped with bucket-forming pockets (39) and whose cross-section substantially fills the cross-section of each borehole (10, 11).

5. Installation as claimed in claim 1, characterised in that the installation has one circular borehole (50) and that the cross-section of the borehole is substantially filled, half by the ascending run of the elevator (53), half by the descending run of the elevator.

6. Installation as claimed in claim 5, characterised in that the elevator (53) is a bucket elevator in which the buckets (60) have a substantially semi-circular cross-section.

7. Installation as claimed in claim 5 or 6, characterised in that the lined borehole (50) has a longitudinal partition (63) or guide rail (64) for guiding the ascending and descending runs of the elevator (53) with respect to each other.

8. Installation as claimed in any one of claims 1—7, characterised in that the ascending run (28) of the elevator (14) is passed through a loading pocket (26) with a tubular elevator inlet channel (27) having walls resiliently engaging the elevator and being of a length exceeding the distance between two successive buckets (30).

9. Installation as claimed in claim 2, 3, 4 or 8, characterised in that the two boreholes (10, 11) are spaced from each other by a distance which is substantially equal to the diameter of an upper guide or drive pulley (13) over which the elevator (14) is passed.

10. Installation as claimed in claim 1, characterised in that the elevator (70) is a screw conveyor, the lining tube (72) of the borehole (71) preferably serving as a support and guide for the tubular casing (73) of the screw conveyor.

## Patentansprüche

1. Hebeeinrichtung für Bergwerke, mit einem Schacht (10, 11, 50, 71) für einen den Querschnitt des Schachtes im wesentlichen ausfüllenden Elevator (14, 53, 70), dadurch gekennzeichnet, dass der Schacht (10, 11, 50, 71) der Einrichtung aus einem ausgefütterten, kreisförmigen Bohrloch mit einem Schachtdurchmesser von 400—700 mm besteht.

2. Einrichtung nach Anspruch 1, dadurch gekennzeichnet, dass sie zwei nebeneinander angebrachte Schächte (10, 11) umfasst, von denen der eine für den aufwärts gehenden Lauf (28) des Elevators und der andere für den abwärts gehenden Lauf (20) des Elevators bestimmt ist, wobei der Querschnitt jedes Schachtes durch den abwärts bzw. den aufwärts gehenden Lauf im wesentlichen ausgefüllt ist, und dass jeder Schacht aus einem ausgefütterten, kreisförmigen Bohrloch mit einem Schachtdurchmesser von 400—700 mm besteht.

3. Einrichtung nach Anspruch 2, dadurch gekennzeichnet, dass der Elevator (14, 53) ein Zugseil (34) oder einen Zuggurt (31, 36, 61) und davon getragene Eimer (32, 35, 39) besitzt, die alle den Querschnitt jedes Bohrlochs im wesentlichen ausfüllen.

4. Einrichtung nach Anspruch 2, dadurch gekennzeichnet, dass der Elevator (14) ein mit Eimer bildenden Taschen (39) ausgerüsteter Bandförderer (53) mit Faltenseitenwand ist, dessen Querschnitt den Querschnitt jedes Bohrlochs (10, 11) im wesentlichen ausfüllt.

5. Einrichtung nach Anspruch 1, dadurch gekennzeichnet, dass sie ein kreisförmiges Bohrloch (50) aufweist, und dass der Querschnitt des Bohrlochs im wesentlichen ausgefüllt ist, zur Hälfte vom aufwärts gehenden Lauf des Elevators (53) und zur Hälfte durch den abwärts gehenden Lauf des Elevators.

6. Einrichtung nach Anspruch 5, dadurch gekennzeichnet, dass der Elevator (53) ein Eimerelevator ist, dessen Eimer (60) im Querschnitt im wesentlichen halbkreisförmig sind.

7. Einrichtung nach Anspruch 5 oder 6, dadurch gekennzeichnet, dass das ausgefütterte Bohrloch (50) eine längsverlaufende Trennwand (63) oder Führungsschiene (64) zur Führung der aufwärts und abwärts gehende Läufe des Elevators (53) im Verhältnis zueinander besitzt.

8. Einrichtung nach einem der Ansprüche 1—7, dadurch gekennzeichnet, dass der aufwärts gehende Lauf (28) des Elevators (14) durch eine Ladetasche (26) mit einem rohrförmigen Elevatoreintrittskanal (27) geführt ist, dessen Länge grösser ist als der Abstand zwischen zwei aufeinander folgenden Eimern (30).

9. Einrichtung nach Anspruch 2, 3, 4 oder 8, dadurch gekennzeichnet, dass die beiden Bohrlöcher (10, 11) in einem gegenseitigen Abstand angebracht sind, der dem Durchmesser einer oberen Umlenk- oder Antriebsrolle (13) im wesentlichen gleich ist, über die der Elevator (14) geführt ist.

10. Einrichtung nach Anspruch 1, dadurch gekennzeichnet, dass der Elevator (70) ein Schneckenförderer ist, wobei das Ausfütterungsrohr (72) des Bohrlochs (71) vorzugsweise als Stütze und Führung für das rohrförmige Mantelrohr (73) des Schneckenförderers dient.

**Revendications**

1. Une installation élévatrice utilisable dans les mines, ayant un puits (10, 11, 50, 71) pour un élévateur (14, 53, 70) remplissant substantiellement la section transversale du puits, caractérisée en ce que le puits (10, 11, 50, 71) de l'installation consiste en un trou de sonde circulaire cuvelé, ayant un diamètre de puits compris dans l'installation de 400—700 mm.

2. Installation selon la revendication 1, caractérisée en ce que l'installation comprend deux puits (10, 11) disposés côte à côte, l'un pour la portion ascendante (28) de l'élévateur et l'autre pour la portion descendante (20) de l'élévateur, la section transversale de chaque puits étant essentiellement remplie par les portions descendante et ascendante, respectivement, de l'élévateur, et chacun de ces puits étant constitué d'un trou de sonde circulaire cuvelé ayant un diamètre de puits compris dans l'intervalle de 400—700 mm.

3. Installation selon la revendication 2, caractérisée en ce que l'élévateur (14, 53) comporte un câble de traction (34) ou une courroie de traction (31, 36, 61) et des godets (32, 35, 39) qui sont portés par ce câble ou cette courroie, chacun des godets remplissant substantiellement la section transversale de chaque trou de sonde.

4. Installation selon la revendication 2, caractérisée en ce que l'élévateur (14) consiste en un convoyeur (53) à courroie à paroi latérale ondulée qui est équipé de poches (39) formant des godets dont la section transversale remplit substantiellement la section transversale de chaque trou de sonde (10, 11).

5. Installation selon la revendication 1, caractérisée en ce que l'installation a un trou de sonde circulaire (50) et en ce que la section transversale du trou de sonde est substantiellement remplie, moitié par la portion ascendante de l'élévateur (53), moitié par la portion descendante de l'élévateur.

6. Installation selon la revendication 5, caractérisée en ce que l'élévateur (53) est un élévateur à godets dont les godets (60) ont une section transversale substantiellement semi-circulaire.

7. Installation selon la revendication 5 ou 6, caractérisée en ce que le trou de sonde cuvelé (50) a une cloison longitudinale (63) ou un rail de guidage (64) pour guider les portions ascendante et descendante de l'élévateur (53) relativement l'une par rapport à l'autre.

8. Installation selon l'une quelconque des revendications 1—7, caractérisée en ce que la portion ascendante (28) de l'élévateur (14) passe à travers une poche de chargement (26) avec un canal (27) d'entrée tubulaire pour l'élévateur dont les parois engagent de manière élastique l'élévateur et one une longueur supérieure à la distance entre deux godets successifs (30).

9. Installation selon la revendication 2, 3, 4 ou 8, caractérisée en ce que les deux trous de sonde (10, 11) sont espacés l'un de l'autre d'une distance qui est sensiblement égale au diamètre de la poulie supérieure de guidage ou d'entraînement (13) sur laquelle passe l'élévateur (14).

10. Installation selon la revendication 1, caractérisée en ce que l'élévateur (70) est un convoyeur à vis, le tube de cuvelage (72) du trou de sonde (71) servant de préférence de support et de guide à l'enveloppe tubulaire (73) du convoyeur à vis.

FIG.2

FIG.1

FIG.3

FIG.5

FIG.4

FIG.7

FIG.6

FIG.8

FIG.9

FIG.10

52

54

53

55

56

51

50

59

58

57

4

FIG.15